# FASCICULE DE BREVET EUROPEEN

(11) **EP 3 349 919 B1**
(45) Date de publication et mention de la délivrance du brevet: **22.04.2020**
(21) Numéro de dépôt: 16763901.2
(22) Date de dépôt: 09.08.2016
(51) Int. Cl.: B07C 3/02, B07C 5/36, B65G 1/04, B65G 1/137, G06Q 10/08

(54) **PROCEDE DE PRELEVEMENT D'OBJETS AVEC DES ROBOTS NAVETTES**
VERFAHREN ZUR ENTNAHME VON OBJEKTEN MITTELS VERFAHRBAREN ROBOTERN
METHOD OF WITHDRAWING OBJECTS USING MOBILE ROBOTS

(30) Priorité: 15.09.2015 FR 1558618
(43) Date de publication de la demande: 25.07.2018
(73) Titulaire: Solystic, 92220 Bagneux (FR)
(72) Inventeur: CHIROL, Luc, 75016 Paris (FR); MIETTE, Emmanuel, 95210 Saint Gratien (FR)
(74) Mandataire: Prugneau, Philippe
(86) Numéro de dépôt international: PCT/FR2016/052057
(87) Numéro de publication internationale: WO 2017/046466

(56) Documents cités:
- WO-A1-2013/155107
- FR-A1- 2 996 788

## Description

### Domaine technique

L'invention concerne le traitement d'objets dans un centre logistique, et en particulier le traitement des colis dans un centre logistique de tri de colis comprenant une zone de rangement des colis où les colis arrivant dans le centre sont stockés en attente d'être repris et chargés en camion suivant une certaine séquence par exemple pour leur distribution par un facteur ou un livreur.

Un tel procédé est déjà connu du brevet FR-2996788.

Dans ce procédé connu, les colis sont déplacés dans le centre logistique à l'aide de robots navettes qui sont des unités mobiles de déplacement. Les colis sont dans ce procédé connu posés sur des étagères de type gigognes, un colis par étagère, qui sont déplacées par les robots navettes conçus à cet effet.

Les étagères gigognes sont des sorte de chariots ayant des hauteurs et des largeurs différentes pour pouvoir s'encastrer les unes dans les autres.

La zone de rangement est divisée en segments de rangement adjacents le long d'une voie de circulation pour les robots navettes. Une unité de contrôle/commande organise le déplacement de ces robots navettes dans la voie de circulation pour prélever les objets dans les segments et les faire sortir de la voie de circulation en série de façon ordonnée suivant une certaine séquence.

En générale pour des raisons d'encombrement au sol, la voie de circulation est une voie simple à double sens de circulation accessible par les robots navettes que par une seule extrémité. Dans chaque segment, on peut avoir une superposition de colis sur étagères gigognes. On peut avoir des segments de rangement sur les deux côtés d'une voie de circulation des robots navettes. On peut avoir plusieurs rangées de segments adjacents et plusieurs voies de circulation le long de ces rangées de segments.

Le document Wo-A-2013/155107 montre également un procédé de traitement d'objets dans un centre logistique comprenant une zone de rangement des objets divisée en segments de rangement adjacents le long d'un voie de circulation pour des robots navettes. Une unité de contrôle/commande organise ici le déplacement de ces robots dans la voie de circulation pour prélever les objets dans les segments et les faire sortir de la voie de circulation en série de façon ordonnée suivant une certaine séquence. L'unité de contrôle/commande commande également ici le déplacement des robots navettes dans la voie de circulation de façon cyclique à partir d'un plan de distribution des objets dans les segments de la zone de rangement et de la séquence ordonnée.

Le but de l'invention est d'optimiser le déplacement des robots navettes dans une voie de circulation pour accélérer le plus possible le chargement des colis en camion dans l'ordre de la séquence.

A cet effet, l'invention a pour objet un procédé de traitement d'objets dans un centre logistique comprenant une zone de rangement des objets divisée en segments de rangement adjacents le long d'une voie de circulation pour des robots navettes, dans lequel une unité de contrôle/commande organise le déplacement de ces robots navettes dans la voie de circulation pour prélever les objets dans les segments et les faire sortir de la voie de circulation en série de façon ordonnée suivant une certaine séquence, caractérisé en ce que l'unité commande le déplacement des robots navettes dans la voie de circulation de façon cyclique, en ce que à partir d'un plan de distribution des objets dans les segments de la zone de rangement et de ladite séquence ordonnée, à chaque cycle de commande l'unité contrôle si plusieurs objets à prélever sont rangés le long de la voie de circulation dans l'ordre de la séquence et dans ce cas commande le déplacement dans la voie de circulation d'autant de robots navettes qu'il y a d'objets à prélever dans l'ordre de la séquence, et dans le cas contraire commande le déplacement dans la voie de circulation d'un seul robot navette pour prélever un seul objet.

Selon une particularité du procédé selon l'invention, l'unité de contrôle/commande commande le déplacement des robots navettes sur une boucle de circulation qui est connectée à plusieurs voies de circulation.

L'idée à la base de l'invention est de prévoir un pilotage cyclique des robots navettes et à chaque cycle d'observer la distribution des objets pouvant être prélevés en séquence pour optimiser le nombre de robots navettes pouvant être déplacés simultanément en série avec des objets dans la voie de circulation en respectant pour ces objets l'ordre de la séquence.

### Présentation sommaire des dessins

La figure 1 illustre de façon très schématique une distribution de colis dans des segments d'une zone de rangement d'un centre logistique qui sont adjacents le long d'une voie de circulation pour des robots navettes.
La figure 2 illustre une séquence ordonnée des objets.
La figure 3 illustre plusieurs cycles de déplacements des robots navettes pour prélever selon l'ordre de la séquence les colis dans les segments de la zone de rangement.
La figure 4 est un organigramme très simplifié illustrant le processus de commande des robots navettes.
La figure 5 illustre de façon schématique une zone de rangement avec plusieurs voies de circulation pour des robots navettes qui sont connectées à une boucle de circulation.

### Description des modes de réalisation

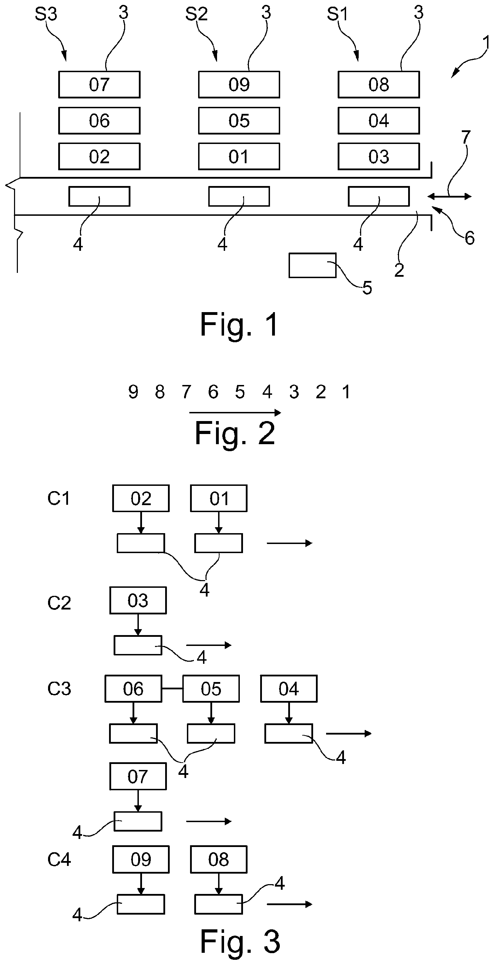

Sur la figure 1, on a illustré très schématiquement trois segments S1, S2, S3 d'une zone de rangement 1 dans un centre logistique qui sont adjacents le long d'une voie de circulation 2.

Sur la figure 1, des colis 3 sont stockés dans les segments. On a illustré dans chaque segment à chaque fois trois colis stockés en superposition. On a fait figurer des numéros 01,02,03,04 ... 09 sur les colis 3 qui sont répartis dans la zone de rangement suivant un certain plan de distribution.

En l'occurrence, les colis 3 ne sont pas ordonnés dans la zone de rangement.

On a illustré dans la voie de circulation ici trois robots navettes 4 en file qui sont pilotés en déplacement par une unité de contrôle/commande 5 (un ordinateur) pour prélever dans la zone de rangement les colis 3 afin de les faire sortir en série de la voie de circulation 2 par l'entrée/sortie 6 et les emmener à un point de chargement dans un camion (non illustré).

La double flèche 7 dans la voie de circulation indique les deux sens de circulation des robots navettes 4 dans la voie de circulation 2.

Sur la figure 2, la séquence ordonnée des colis est illustrée avec les numéros de colis, ici 9,8,7,6,5,4,3,2,1. Dans cette séquence, le colis numéroté 01 doit sortir le premier de la zone de rangement 1 et le colis numéroté 09 doit sortir le dernier de cette zone de rangement 1.

Le plan de distribution des colis dans la zone de rangement et la séquence ordonnée sont enregistrés en mémoire de l'unité 5, par exemple dans une base de données.

Suivant l'invention, l'unité 5 commande le déplacement ici des trois robots navettes 4 de façon cyclique.

Sur la figure 3, on a illustré différents cycles successifs de commande de déplacement pour les robots navettes 4.

A cycle C1, tous les colis sont présents dans la zone de rangement selon le plan de distribution illustré sur la figure 1.

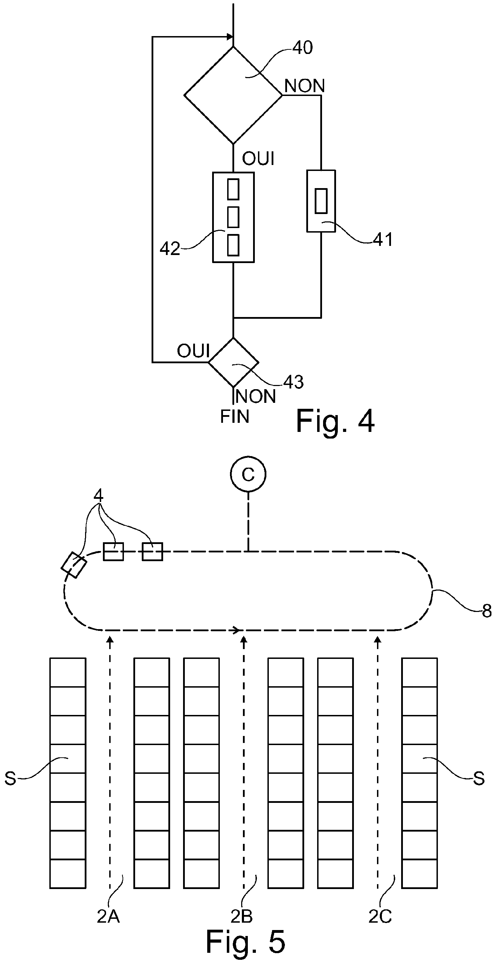

L'unité 5 à partir de ce plan de distribution et de la séquence ordonnée des colis, détermine (étape 40 sur la figure 4) si plusieurs colis 3 à prélever sont rangés en séquence le long de la voie de circulation 2 dans l'ordre de la séquence de la figure 2.

Pour le cycle C1, l'unité 5 détecte qu'il y a les colis numérotés 02 et 01 qui sont rangés dans l'ordre de la séquence.

L'unité 5 commande le déplacement de deux robots navettes 4 dans la voie de circulation pour prélever ces deux colis et les sortir en série de la voie de circulation. On comprend donc qu'il y dans ce cas autant de robots navettes qui viennent dans la voie de circulation qu'il y a de colis à prélever pour le cycle de commande courant.

Au cycle suivant C2, l'unité 5 détecte qu'il n'y a pas plusieurs colis rangés dans l'ordre de la séquence. Elle commande (étape 41 de la figure 4) le déplacement d'un seul robot navette 4 dans la voie de circulation pour prélever le seul colis numéroté 03.

Au cycle suivant C3, l'unité 5 détecte qu'il y a trois colis numérotés 06, 05, 04 qui sont rangés dans l'ordre de la séquence. Elle commande le déplacement de trois robots navettes 4 (bloc 42 sur la figure 4) dans la voie de circulation pour prélever ces trois colis et les sortir en série de la voie de circulation.

Au cycle suivant C4, l'unité 5 détecte qu'il n'y a pas plusieurs colis rangés dans l'ordre de la séquence. Elle commande le déplacement d'un robot navette 4 dans la voie de circulation pour prélever le colis numéroté 07.

Au cycle suivant C5, l'unité 5 détecte qu'il y a deux colis numérotés 09 et 08 qui sont rangés dans l'ordre de la séquence. Elle commande le déplacement de deux robots navettes 4 dans la voie de circulation pour prélever ces deux colis et les sortir en série de la voie de circulation.

Le processus s'arrête automatiquement s'il n'y a plus de colis à prélever (étape 43 sur la figure 4).

Ce processus fonctionne de la même manière avec deux rangées de segments de part et d'autre de la voie de circulation et aussi avec plusieurs rangées de segments et plusieurs voies de circulation.

Sur la figure 5 on a illustré une zone de rangement avec trois voies de circulation 2A,2B,2C parallèles qui sont connectées à une boucle de circulation 8 pour les robots navettes 4. Le sens de circulation sur la boucle 8 est indiqué par une flèche sur la boucle 8.

Des rangées de segments S sont disposées de part et d'autre de chaque voie de circulation.

Dans cette configuration de la zone de rangement, des robots navettes 4 peuvent circuler à vide en file dans la boucle de circulation 8 en attente d'être déplacés vers les voies de circulation sous la commande de l'unité 5.

Par ailleurs, l'unité 5 est apte à commander un arrêt des robots navettes 4 sur la boucle de circulation 8 pour l'insertion d'un train de robots navettes 4 sortant d'une voie de circulation de façon à réaliser une insertion de robots navettes chargés de colis sur la boucle de circulation.

En se référant à la figure 5, les colis de la séquence peuvent être dispersés sur plusieurs voies de circulation, par exemple sur les trois voies de circulation 2A,2B et 2C et donc à chaque cycle, l'unité 5 est agencée pour détecter pour chaque voie de circulation si un ou plusieurs colis sont rangés en séquence dans cette voie de circulation. Par ailleurs, l'unité 5 est agencée aussi pour déterminer l'ordre dans lequel les robots navettes chargés avec les colis qui sortent des voies de circulation doivent être insérés dans la boucle de circulation 8.

Les robots navettes chargés avec les colis sur la boucle de circulation 8 quittent la boucle de circulation 8 en un point qui rejoint le point de chargement illustré par C sur la figure 5.

Avec le procédé selon l'invention, on peut avoir une flotte de robots navettes en nombre égal au nombre de segments adjacents le long d'une voie de circulation.

Il va de soi que la présente invention ne saurait être limitée à la description qui précède d'un de ses modes de réalisation, susceptible de subir quelques modifications sans pour autant sortir du cadre de l'invention.

On peut par exemple avoir un cycle de traitement pour l'unité 5 qui est temporel, par exemple une période de temps déterminée qui correspond au temps maximal de rotation des robots navettes pour transférer les colis des voies de circulation vers le point de chargement C.

Mais le cycle de traitement de l'unité 5 selon l'invention peut être de durée variable si il est lié par exemple à la détection d'une certaine occurrence, par exemple la détection qu'il n'y a plus de robots navettes dans les voies de circulation.

## Revendications

1. Procédé de traitement d'objets (3) dans un centre logistique comprenant une zone de rangement (1) des objets divisée en segments de rangement adjacents le long d'une voie de circulation (2) pour des robots navettes (4), dans lequel une unité de contrôle/commande (5) organise le déplacement de ces robots navettes dans la voie de circulation pour prélever les objets dans les segments et les faire sortir de la voie de circulation en série de façon ordonnée suivant une certaine séquence, et dans lequel l'unité de contrôle/commande commande le déplacement des robots navettes dans la voie de circulation de façon cyclique (C1,C2,C3,C4...) à partir d'un plan de distribution des objets dans les segments de la zone de rangement et de ladite séquence ordonnée, **caractérisé en ce qu'**à chaque cycle l'unité de contrôle/commande contrôle si plusieurs objets à prélever sont rangés le long de la voie de circulation dans l'ordre de la séquence et dans ce cas commande le déplacement dans la voie de circulation d'autant de robots navettes qu'il y a d'objets à prélever dans l'ordre de la séquence, et dans le cas contraire commande le déplacement dans la voie de circulation d'un seul robot navette pour prélever un seul objet.

2. Procédé selon la revendication 1, **caractérisé en ce que** l'unité de contrôle/commande commande le déplacement des robots navettes sur une boucle de circulation (8) qui est connectée à plusieurs voies de circulation.

3. Procédé selon la revendication 1, **caractérisé en ce que** les objets sont des colis à charger en séquence en camion.

## Patentansprüche

1. Verfahren zur Verarbeitung von Gegenständen (3) in einem Logistikzentrum, umfassend einer Ablagezone (1) der Gegenstände, die in benachbarte Ablagesegmente entlang einer Fahrspur (2) für Zuführroboter (4) unterteilt ist, bei dem eine Regel-/Steuereinheit (5) die Verlagerung dieser Zuführroboter in der Fahrspur zum Entnehmen der Gegenstände in den Segmenten und zum seriellen Herausführen dieser von der Fahrspur auf geordnete Weise gemäß einer bestimmten Sequenz, und bei dem die Regel-/Steuereinheit die Verlagerung der Zuführroboter in der Fahrspur auf zyklische Weise (C1, C2, C3, C4...) ausgehend von einem Verteilplan der Gegenstände in den Segmenten der Ablagezone und der geordneten Sequenz steuert,
**dadurch gekennzeichnet,**
**dass** bei jedem Zyklus die Regel-/Steuereinheit überprüft, ob mehrere zu entnehmende Gegenstände entlang der Fahrspur in der Reihenfolge der Sequenz abgelegt sind und in diesem Fall die Verlagerung in der Fahrspur von so vielen Zuführrobotern steuert, wie es zu entnehmende Gegenstände in der Reihenfolge der Sequenz gibt, und im gegenteiligen Fall die Verlagerung in der Fahrspur eines einzigen Zuführroboters zum Entnehmen eines einzigen Gegenstands steuert.

2. Verfahren nach Anspruch 1, **dadurch gekennzeichnet, dass** die Regel-/Steuereinheit die Verlagerung der Zuführroboter auf einer Fahrschleife (8) steuert, die mit mehreren Fahrspuren verbunden ist.

3. Verfahren nach Anspruch 1, **dadurch gekennzeichnet, dass** die Gegenstände sequentiell in einen Lastwagen zu ladende Pakete sind. *

## Claims

1. A method of handling articles (3) in a logistics center including an article stowage zone (1) subdivided into adjacent stowage segments along a travel path (2) for shuttle robot carts (4), in which method a monitoring and control unit (5) organizes the movement of said shuttle robot carts along the travel path in such a manner as to take the articles from the segments and to cause them to exit from the travel path in series and in ordered manner in a certain sequence, and in which the monitoring and control unit causes the shuttle robot carts to move cyclically (C1, C2, C3, C4, ...) along the travel path on the basis of a distribution plan indicating the distribution of the articles in the segments of the stowage zone, and on the basis of said ordered sequence, said method being **characterized in that** at each cycle, the monitoring and control unit checks whether or not a plurality of articles to be taken are stowed along the travel path in the sequential order, and, if so, causes to move along the travel path as many shuttle robot carts as there are articles to be taken in the sequential order, and, otherwise, causes a single shuttle robot cart to move along the travel path for the purpose of taking a single article.

2. A method according to claim 1, **characterized in that** the monitoring and control unit causes shuttle robot carts to move around a travel loop (8) that is connected to a plurality of travel paths.

3. A method according to claim 1, **characterized in that** the articles are parcels to be loaded in sequence onto a truck.
